# EUROPEAN PATENT APPLICATION

(11) **EP 4 576 511 A1**
(43) Date of publication of application: **25.06.2025**
(21) Application number: 24218849.8
(22) Date of filing: 10.12.2024
(51) Int. Cl.: H02K 3/50

(54) **ELECTRICAL CONNECTION, ELECTRICAL MACHINE SYSTEM COMPRISING SUCH AN ELECTRICAL CONNECTION AND METHOD FOR FIXING BUSBARS TO A SUPPORT**

(30) Priority: 20.12.2023 DE 102023136116
(71) Applicant: Valeo eAutomotive Germany GmbH, 91056 Erlangen (DE)
(72) Inventor: RACK, Timo, 91056 Erlangen (DE); EICHNER, Markus, 91056 Erlangen (DE)
(74) Representative: Valeo Powertrain Systems

(57) **Abstract**

The electrical connection (110) comprises: - several busbars (202_{U-W}) designed for connecting an inverter to an electrical machine, each busbar (202_{U-W}) having two fixation holes (212_{U-W}, 214_{U-W}); - a support (216) designed for supporting the busbars (202_{U-W}), the support (216) comprising: • grooves (218_{U-W}) designed for respectively receiving the busbars (202_{U-W}), and • for each groove (218_{U-W}), two fixation pins (220_{U-W}, 222_{U-W}) projecting from a bottom (306) of the groove (218_{U-W}), designed for being respectively received in the fixation holes (212_{U-W}, 214_{U-W}) of the busbar (202_{U-W}) received in the groove (218_{U-W}) and for being riveted to fix the busbars (202_{U-W}) to the support (216); wherein each fixation hole (212_{U-W}, 214_{U-W}) is larger than the fixation pin (220_{U-W}, 222_{U-W}) received.

## Description

### Technical field

The present invention relates to an electrical connection, an electrical machine system comprising such an electrical connection and a method for fixing busbars to a support.

The invention may in particular be used in a mobility device. A mobility device is for example a motorized land vehicle, a train, an aircraft or even a drone. A motorized land vehicle is for example a motor vehicle, a motorcycle, a motorized bicycle or a motorized wheelchair.

### Background art

It is known to use busbars for connecting an inverter to phases of an electrical machine. Due to tolerances, the connection points of the inverter and/or the connection points of the electrical machine may be slightly misplaced. The busbars, which are rigid electrical conductors, are therefore bent to compensate.

To insulate the busbars from the environment, the busbars are often over-molded together. However, the overmolding may crack because of the bending of the busbars.

The invention aims to overcome at least part of the preceding problems.

### Disclosure of the invention

The invention relates to an electrical connection comprising:
- several busbars designed for connecting an inverter to an electrical machine, each busbar having two fixation holes;
- a support designed for supporting the busbars, the support comprising:
   - grooves designed for respectively receiving the busbars, and
   - for each groove, two fixation pins projecting from a bottom of the groove, designed for being respectively received in the fixation holes of the busbar received in the groove and for being riveted to fix the busbars to the support;
wherein each fixation hole is larger than the fixation pin received.

The invention may also include one or more of the following optional features, in any technically possible combination.

Optionally, the fixation hole has a periphery extending at least 0.5 mm from the fixation pin, all along the periphery.

Optionally, the periphery of each fixation hole extends at most 1,5 mm from the fixation pin, and preferably at most 1mm from the fixation pin, all along the periphery.

Also optionally, the support comprises two flexible tabs from which the fixation pins respectively projects.

Also optionally, each tab extends parallel to the bottom of the groove.

Also optionally, each tab is cut into the bottom of the groove.

Also optionally, the fixation pin projects perpendicular to the tab.

Also optionally, the tabs are made of plastic.

Also optionally, the support is made of plastic.

Also optionally, for each busbar, at least one of the fixation holes, for example both, are circular.

Also optionally, for each busbar, at least one of the fixation holes is oblong, with a first dimension at least 20% longer than a second dimension perpendicular to the first dimension.

Also optionally, the support comprises at least one positioning pin for positioning the support with respect to a housing of the electrical machine.

The invention also relates to an electrical machine system comprising:
- an electrical machine having several phases;
- an inverter; and
- an electrical connection according to the invention.

The invention also relates to a method for fixing, to a support, busbars designed for connecting an inverter to an electrical machine, comprising inserting the busbars into respective grooves of the support and, for each groove, inserting two fixation pins projecting from a bottom of the groove respectively in two fixation holes of the busbar, wherein each fixation hole is larger than the fixation pin received so that the fixation hole has a periphery extending at least 0.5 mm from the fixation pin, all along the periphery.

Optionally, the method further comprises riveting the fixation pins in order to fix the busbars to the support.

Also optionally, the method further comprises, for each busbar, connecting a first connection portion of the busbar to the inverter and a second connection portion of the busbar to the electrical machine, for example by screwing or welding.

### Brief description of the drawings

The invention will be better understood with the help of the description which follows, given solely by way of example and made with reference to the appended drawings in which:
- figure 1 is schematic view of an electrical machine system in which the invention may be carried out,
- figure 2 is a three-dimensional view of an electrical connection according to the invention, used in the electrical machine system of figure 1,
- figure 3 is a three-dimensional view of a portion of the electrical connection,
- figure 4 is a top view of fixation holes and pins,
- figure 5 is a three-dimensional view similar to figure 2, after the riveting of fixation pins, and
- figure 6 is a flow chart of a method for fixing busbars to a support.

### Detailed description

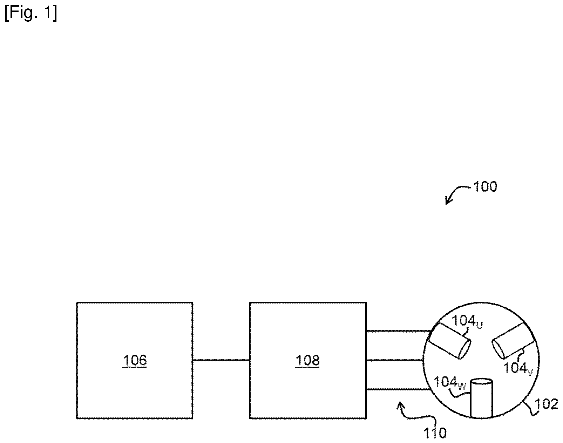

Referring to **figure 1**, an electrical machine system 100 in which the invention may be carried out, will now be described. The electrical machine system 100 is for example designed to be used in a mobility device.

The electrical machine system 100 first comprises an electrical machine 102 having several phases 104u, 104v, 104w.

The electrical machine system 100 further comprises a DC voltage source 106, such as a battery.

The electrical machine system 100 further comprises an inverter 108 designed for providing phase voltages U, V, W from the DC voltage source 106.

The electrical machine system 100 further comprises an electrical connection 110.

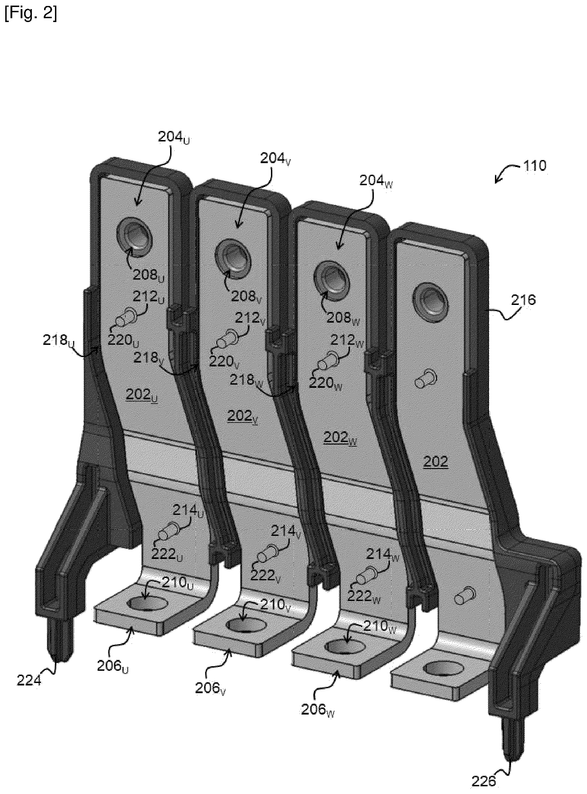

Referring to **figure 2****,** the electrical connection 110 will now be described in more detail.

The electrical connection 110 first comprises several busbars 202_{U}, 202_{V}, 202_{W} designed for connecting the inverter 108 to the phases 104_{U-W} of the electrical machine 102, in order to respectively convey the phase voltages U, V, W from the inverter 108 to respectively the phases 104_{U-W} of the electrical machine 102. Each busbar 202_{U-W} is a rigid strip, for example bent, made of electrical conductive material such as copper.

In order to be connected, each busbar 202_{U-W} comprises a first connection portion 204_{U}, 204_{V}, 204_{W} designed to be connected to the inverter 108 and a second connection portion 206_{U}, 206_{V}, 206_{W} designed to be connected to the respective phase 104_{U-W} of the electrical machine 102. The connection to the inverter 108 and/or the phases 104_{U-W} is for example realized by screwing or welding. In case of screwing, the connection portion 204_{U-W}, 206_{U-W} comprises for example a screwing hole 208_{U}, 208_{V}, 208_{W}, 210_{U}, 210_{V}, 210_{W}.

Each busbar 202_{U-W} further comprises two fixation holes 212_{U}, 212_{V}, 212_{W}, 214_{U}, 214_{V}, 214_{W}, for example located between the two connection portions 204_{U-W}, 206_{U-W} along the strip.

The electrical connection 110 further comprises a support 216 designed for supporting the busbars 202_{U-W}. The support 216 comprises grooves 218U, 218V, 218W designed for respectively receiving the busbars 202_{U-W}. The support 216 further comprises, for each groove 218u-w, two fixation pins 220_{U}, 220_{V}, 220_{W}, 222_{U}, 222_{V}, 222_{W} projecting from a bottom (not depicted in figure 2) of the groove 218_{U-W}, designed for being respectively received in the fixation holes 212_{U-W}, 214_{U-W} of the busbar 202_{U-W} received in the groove 218_{U-W}.

For example, The support 216 further comprises at least one positioning pin 224, 226 for positioning the support 216 with respect to a housing (not depicted) of the electrical machine 102.

The support 216 is made of electrical non-conductive material, such as plastic.

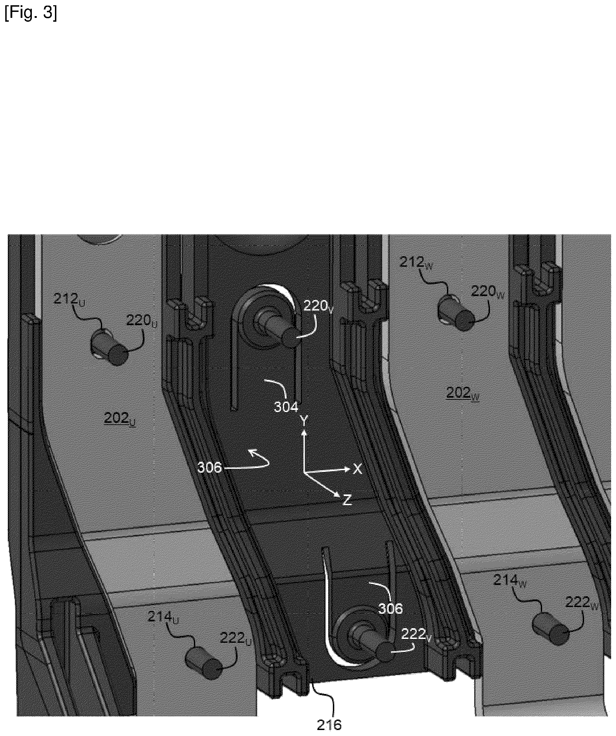

Referring to **figure 3****,** the support 216 comprises for example, for each groove 218_{U-W}, two flexible tabs 302, 304 from which the pins respectively projects, for instance perpendicularly to the tab 302, 304.

Preferably, each tab 302, 304 extends parallel to the bottom, associated with reference 306 in figure 3, of the groove 218_{U-W}. For example, each tab 302, 304 is cut into the bottom 306 of the groove 218_{U-W}.

In order to be flexible, the tabs 304, 306 are preferably made of plastic.

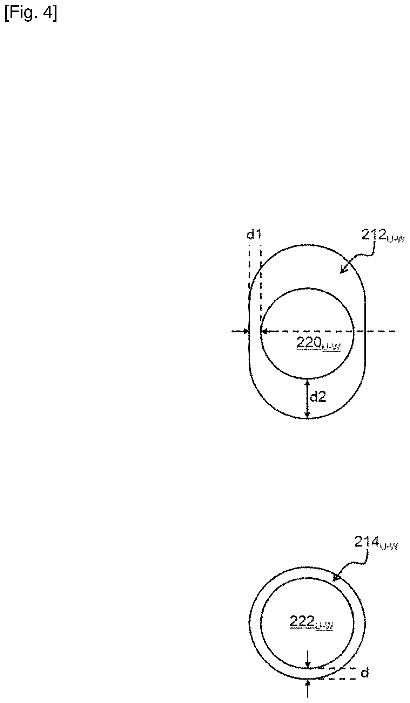

Referring to **figure 4****,** each fixation hole 212_{U-W}, 214_{U-W} is larger than the fixation pin 220_{U-W}, 222_{U-W} received so that the fixation hole 212_{U-W}, 214_{U-W} has a periphery extending, all along the periphery, at least 0,5 mm and at most 1 mm from the fixation pin 220_{U-W}, 222_{U-W} received.

For each busbar 202_{U-W}, at least one of the fixation holes is for example circular (fixation hole 214_{U-W} in the figures) and/or at least one of the fixation holes is oblong (fixation hole 212_{U-W} in the figures). The oblong fixation hole has then a first dimension d1 at least 20% longer than a second dimension d2 perpendicular to the first dimension d1.

The circular fixation hole has a periphery extending at a distance d between 0,6 mm and 0,7 mm.

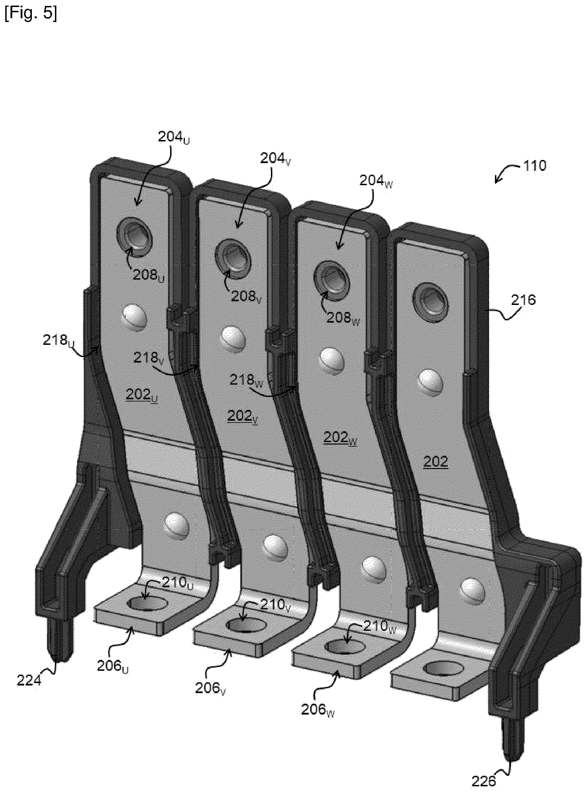

Referring to **figure 5****,** the fixation pins 220_{U-W} are designed to be riveted to fix the busbars 202_{U-W} to the support 216.

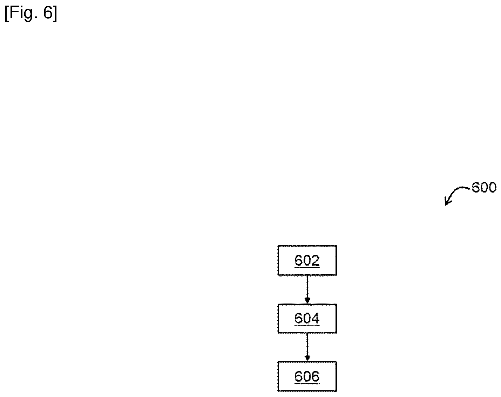

Referring to **figure 6****,** a method 600 for fixing the busbars 202_{U-W} to the support 216 first comprises a step 602 of respectively inserting the busbars 202_{U-W} into the grooves 218_{U-W} of the support 216. During this step, for each groove 218u-w, the two fixation pins are respectively inserted into the two fixation holes 212_{U-W}.

During a step 604, the fixation pins 220u-w, 222_{U-W} are riveted in order to fix the busbars 202_{U-W} to the support 216.

During a step 606, for each busbar 202_{U-W}, the first connection portion 204_{U-W} is connected to the inverter 108 and the second connection portion 206_{U-W} is connected to the electrical machine 102, for example by screwing or welding.

In conclusion, the invention allows some movement, with respect to the support 116, of each busbar against the bottom 306 (in the X, Y directions in figure 3). Furthermore, the use of the flexible tabs 304, 306 allows some movement perpendicularly to the bottom 306 (in the Z direction in figure 3).

It should also be noted that the invention is not limited to the embodiments described above. It will indeed appear to those skilled in the art that various modifications can be made to the embodiments described above, in light of the teaching which has just been disclosed to him.

In the detailed presentation of the invention which is made previously, the terms used should not be interpreted as limiting the invention to the embodiments set out in the present description, but must be interpreted to include all the equivalents for which the prediction is within the reach of those skilled in the art by applying their general knowledge to the implementation of the teaching which has just been disclosed to them.

## Claims

1. Electrical connection (110) comprising:
- several busbars (202_{U-W}) designed for connecting an inverter (108) to an electrical machine (102), each busbar (202_{U-W}) having two fixation holes (212_{U-W}, 214_{U-W});
- a support (216) designed for supporting the busbars (202_{U-W}), the support (216) comprising:
• grooves (218_{U-W}) designed for respectively receiving the busbars (202_{U-W}), and
• for each groove (218_{U-W}), two fixation pins (220_{U-W}, 222_{U-W}) projecting from a bottom (306) of the groove (218_{U-W}), designed for being respectively received in the fixation holes (212_{U-W}, 214_{U-W}) of the busbar (202_{U-W}) received in the groove (218_{U-W}) and for being riveted to fix the busbars (202_{U-W}) to the support (216);
wherein each fixation hole (212_{U-W}, 214_{U-W}) is larger than the fixation pin (220_{U-W}, 222_{U-W}) received.

2. Electrical connection (110) according to claim 1, wherein the fixation hole (212U-W, 214U-W) has a periphery extending at least 0.5 mm from the fixation pin (220U-W, 222U-W), all along the periphery.

3. Electrical connection (110) according to claim 1 or 2, wherein the periphery of each fixation hole (212_{U-W}, 214_{U-W}) extends at most 1,5 mm from the fixation pin (220_{U-W}, 222_{U-W}), and preferably at most 1mm from the fixation pin (220_{U-W}, 222_{U-W}), all along the periphery.

4. Electrical connection (110) according to any of claims 1 to 3, wherein the support (216) comprises two flexible tabs (304, 306) from which the fixation pins (220_{U-W}, 222_{U-W}) respectively projects.

5. Electrical connection (110) according to claim 3, wherein each tab (304, 306) extends parallel to the bottom (306) of the groove (218_{U-W}).

6. Electrical connection (110) according to claim 4 or 5, wherein each tab (304, 306) is cut into the bottom (306) of the groove (218_{U-W}).

7. Electrical connection (110) according to any of claims 4 to 6, wherein the fixation pin (220_{U-W}, 222_{U-W}) projects perpendicular to the tab (304, 306).

8. Electrical connection (110) according to any of claims 4 to 7, wherein the tabs (304, 306) are made of plastic.

9. Electrical connection (110) according to any of claims 1 to 8, wherein the support (216) is made of plastic.

10. Electrical connection (110) according to any of claims 1 to 9, wherein, for each busbar (202_{U-W}), at least one of the fixation holes (212_{U-W}, 214_{U-W}), for example both, are circular or oblong, with a first dimension (D1) at least 20% longer than a second dimension (D2) perpendicular to the first dimension (D1).

11. Electrical connection (110) according to any of claims 1 to 10, wherein the support (216) comprises at least one positioning pin (224, 226) for positioning the support (216) with respect to a housing of the electrical machine (102).

12. Electrical machine system (100) comprising:
- an electrical machine (102) having several phases (104_{U-W});
- an inverter (108); and
- an electrical connection (110) according to any of claims 1 to 11.
